# EUROPÄISCHE PATENTANMELDUNG

(11) **EP 3 731 160 A1**
(43) Veröffentlichungstag der Anmeldung: **28.10.2020**
(21) Anmeldenummer: 19170858.5
(22) Anmeldetag: 24.04.2019
(51) Int. Cl.: G06Q 10/06, B25F 5/00

(54) **VERFAHREN ZUM DOKUMENTIEREN WENIGSTENS EINES ARBEITSSCHRITTS UND HANDGEFÜHRTES WERKZEUG**

(71) Anmelder: Adolf Würth GmbH & Co. KG, 74653 Künzelsau (DE)
(72) Erfinder: Marquette, Adrien, 74523 Schwäbisch Hall (DE)
(74) Vertreter: Patentanwälte Ruff, Wilhelm, Beier, Dauster & Partner mbB

(57) **Zusammenfassung**

Die Erfindung betrifft ein Verfahren zum Dokumentieren wenigstens eines Arbeitsschritts mit einem handgeführten Werkzeug, wobei das handgeführte Werkzeug wenigstens eine mit dem Werkzeug mechanisch verbundene Kamera aufweist, bei dem die Schritte des Aktivierens der Kamera und des Aufnehmens von Bildern des Arbeitsschritts, der mit dem handgeführten Werkzeug ausgeführt wird, und des Erzeugens von zu dem Arbeitsschritt gehörenden Bilddaten vorgesehen sind.

## Beschreibung

Die Erfindung betrifft ein Verfahren zum Dokumentieren wenigstens eines Arbeitsschritts mit einem handgeführten Werkzeug. Die Erfindung betrifft auch ein handgeführtes Werkzeug.

Mit der Erfindung soll ein Verfahren zum Dokumentieren wenigstens eines Arbeitsschritts mit einem handgeführten Werkzeug und ein handgeführtes Werkzeug verbessert werden.

Erfindungsgemäß ist hierzu ein Verfahren zum Dokumentieren wenigstens eines Arbeitsschritts mit einem handgeführten Werkzeug vorgesehen, wobei das handgeführte Werkzeug eine mit dem Werkzeug insbesondere mechanisch verbundene Kamera aufweist, bei dem die Schritte Aktivieren der Kamera und Aufnehmen von Bildern des Arbeitsschritts, der mit dem handgeführten Werkzeug ausgeführt wird, und Erzeugen von zu dem Arbeitsschritt gehörenden Bilddaten vorgesehen ist.

Indem das handgeführte Werkzeug selbst mit wenigstens einer Kamera versehen ist, ist das Dokumentieren eines mit dem handgeführten Werkzeug durchgeführten Arbeitsschritts problemlos möglich. Die Kamera oder die Kameras an dem handgeführten Werkzeug sind dabei so ausgerichtet, dass sie zumindest einen bearbeiteten bzw. zu bearbeitenden Gegenstand im Blickfeld haben, idealerweise sind die Kameras so ausgerichtet, dass sie sowohl einen Werkzeugeinsatz des handgeführten Werkzeugs als auch den bearbeiteten bzw. zu bearbeitenden Gegenstand im Blickfeld haben. Mittels der wenigstens einen Kamera kann dadurch in sehr einfacher Weise eine Dokumentation über den durchgeführten Arbeitsschritt erstellt werden. Als handgeführtes Werkzeug wird dabei ein in der Hand gehaltenes, bewegliches Werkzeug bezeichnet, das nicht mit einer Maschinenbasis verbunden ist, mit Ausnahme eines gegebenenfalls vorgesehenen Kabels für elektrische Leitungen. Nicht kabelgebundene handgeführte Werkzeuge, beispielsweise mit Akkus, Verbrennungsmotor oder Flamme, sind vom Rahmen der Erfindung ebenfalls erfasst. Insbesondere werden beispielsweise Roboterarme, auch wenn diese von Hand geführt werden können, nicht als handgeführte Werkzeuge im Sinne der Erfindung bezeichnet. Handgeführte Werkzeuge sind typischerweise elektrische Bohrmaschinen, elektrische Schleifer, elektrische Sägen, Akkuschrauber, elektrische Heißluftgebläse und dergleichen. Solche handgeführten Werkzeuge werden in großem Umfang zum Durchführen von Arbeitsschritten aller Art eingesetzt. Sollen die durchgeführten Arbeitsschritte dokumentiert werden, ist dies in der Regel sehr arbeitsaufwändig und wird daher ungern oder zumindest unvollständig gemacht. Das Vorsehen wenigstens einer Kamera an dem handgeführten Werkzeug erleichtert das Dokumentieren eines Arbeitsschritts erheblich. Die aufgenommenen Bilddaten stellen zumindest einen Teil der Dokumentation dar und können, falls gewünscht und erforderlich, noch durch weitere Informationen ergänzt werden, beispielsweise Datum, Uhrzeit sowie den Namen bzw. eine Identifikation des Bedieners.

In Weiterbildung der Erfindung ist das Erfassen von weiteren zu dem Arbeitsschritt gehörenden Parametern mittels wenigstens einem weiteren, in oder an dem Handwerkzeug angeordneten Sensors und das Erzeugen von zu dem Arbeitsschritt gehörenden Sensordaten vorgesehen.

Falls gewünscht oder erforderlich, können der Dokumentation weitere Daten hinzugefügt werden, die dann durch weitere Sensoren erfasst werden. Dies können beispielsweise eine Umgebungstemperatur, eine Umgebungsfeuchte, aber auch Drehzahl, Größe und Drehmoment eines verwendeten Werkzeugeinsatzes sein. Beispielsweise kann auch die Art bzw. der Typ des Werkzeugeinsatzes erfasst werden. So kann bei einem Winkelschleifer durch Bilderkennung beispielsweise festgestellt werden, ob es sich um eine Schleifscheibe für Stein oder Metall handelt. Weitere mittels Sensoren erfasste Daten können beispielsweise die Temperatur eines mit dem handgeführten Werkzeug erzeugten Heißluftstroms oder auch eine Position des handgeführten Werkzeugs bzw. des Werkzeugeinsatzes im Raum sein. Muss beispielsweise ein Bohrloch an einer vorgegebenen Stelle gesetzt werden, kann mittels eines Positionssensors die Position des handgeführten Werkzeugs bzw. des Werkzeugeinsatzes erfasst, gegebenenfalls korrigiert und dann dokumentiert werden.

In Weiterbildung der Erfindung ist das Erzeugen von zu dem handgeführten Werkzeug gehörenden Gerätedaten vorgesehen.

Solche Gerätedaten können beispielsweise der Gerätetyp und/oder eine Gerätenummer sein, beispielsweise aber auch Art und Größe eines verwendeten Werkzeugeinsatzes sowie gegebenenfalls die mit dem handgeführten Werkzeug während des Arbeitsschritts gearbeiteten Betriebsstunden und die Gesamtzahl der Betriebsstunden des handgeführten Werkzeugs sowie eine Drehzahl und einen Betriebszustand des handgeführten Werkzeugs.

In Weiterbildung der Erfindung ist das Übertragen der erzeugten Bilddaten, Sensordaten und/oder Gerätedaten auf einen Computer und das zumindest zeitweise Abspeichern der Bilddaten, Sensordaten und/oder Gerätedaten im dem Computer vorgesehen.

In Weiterbildung der Erfindung ist das Erstellen einer Dokumentation des wenigstens einen Arbeitsschritts anhand der auf den Computer übertragenen Bilddaten, Sensordaten und/oder Gerätedaten vorgesehen.

Das Erstellen einer Dokumentation kann dadurch in der Regel erst nach dem Durchführen des Arbeitsschritts, beispielsweise am Ende eines Arbeitstags, erfolgen. Beim Erstellen einer Dokumentation können gegebenenfalls manuell oder mittels geeigneter Einrichtungen weitere Daten hinzugefügt werden oder es können auch Daten, beispielsweise überflüssige Bilddaten, gelöscht werden. Die so erstellte Dokumentation kann dann über eine Schnittstelle des handgeführten Geräts ausgelesen und an einem geeigneten Ort abgespeichert werden. Die Schnittstelle kann kabelgebunden oder auch kabellos ausgeführt sein. Beispielsweise kann die erstellte Dokumentation in ein Gebäudeinformationssystem (BIM, Building Information Management) geladen werden. Es ist dabei im Rahmen der Erfindung vorgesehen, dass das handgeführte Werkzeug über die Schnittstelle auch Informationen von dem Gebäudeinformationssystem erhält, beispielsweise die Positionen für Bohrlöcher, Art und zu verwendende Parameter für das Durchführen eines Arbeitsschritts, beispielsweise eine zu verwendende Schleifscheibe, ein zu verwendender Kleber oder dergleichen.

In Weiterbildung der Erfindung erfolgt das Aktivieren der Kamera mittels Bewegen des handgeführten Werkzeugs, Einschalten des handgeführten Werkzeugs und/oder Ausklappen der Kamera aus einem Gehäuse des Werkzeugs.

Das Aktivieren der Kamera kann beispielsweise automatisch mit dem Aufnehmen und Bewegen des handgeführten Werkzeugs erfolgen. Vorteilhaft ist auch das Aktivieren der Kamera mit dem Einschalten des handgeführten Werkzeugs, beispielsweise mit dem Einschalten einer elektrischen Handbohrmaschine. Das Aktivieren der Kamera kann auch durch einfaches Ausklappen der Kamera aus einem Gehäuse oder auch einfaches Einschalten der Kamera erfolgen. Dies ist insbesondere dann vorteilhaft, wenn beispielsweise nach dem Durchführen eines Teilarbeitsschritts mit dem handgeführten Werkzeug, beispielsweise das Abschleifen einer Oberfläche, noch eine nachfolgende rein manuelle Bearbeitung erfolgen soll, beispielsweise das Nachschleifen oder das Streichen der bearbeiteten Fläche und wenn diese nachfolgenden Arbeitsschritte ebenfalls dokumentiert werden sollen.

In Weiterbildung der Erfindung ist das Erfassen von weiteren zu dem Arbeitsschritt gehörenden Parametern vorgesehen, wobei das Erfassen eines Datums, einer Uhrzeit, eines Materials eines mit dem Werkzeug bearbeiteten Gegenstands, einer Art und Größe eines verwendeten Werkzeugeinsatzes, einer Drehposition eines Werkzeugeinsatzes relativ zu dem Werkzeug, einer Bohrlochtiefe oder Einschraubtiefe, einer Drehzahl eines Werkzeugeinsatzes des Werkzeugs, eines Drehmoments eines Werkzeugeinsatzes des Werkzeugs, einer Position des Werkzeugs und des Werkzeugeinsatzes im Raum, einer Temperatur des Werkzeugs, einer Umgebung und/oder eines bearbeiteten Gegenstands, einer Feuchte der Umgebung und/oder eines bearbeiteten Gegenstands und/oder von Identifikationsdaten eines Bedieners des Werkzeugs vorgesehen ist.

Beispielsweise kann vor dem oder beim Bohren eines Lochs erfasst werden, ob die Gebäudewand aus Holz oder Stein besteht und ob für das Bohren des Lochs ein Holzbohrer oder ein Steinbohrer verwendet wird. Beim Einschrauben von Schrauben kann festgestellt werden, ob das Schrauberbit zu der Schraube passt und mit welcher Drehzahl und mit welchem Drehmoment die Schraube eingeschraubt wird. Beispielsweise kann auch eine Drehposition der bereits vormontierten Schraube erfasst werden und eine Drehposition des Schrauberbits kann dann automatisch auf die korrekte Position eingestellt werden, so dass das Schrauberbit ohne weitere Drehung unmittelbar in die Antriebsausbildung der Schraube eingreifen kann. Mittels eines Positionssensors kann eine Position des Werkzeugs und des Werkzeugeinsatzes im Raum erfasst werden. Beispielsweise kann festgestellt werden, ob ein Bohrloch an der korrekten Stelle, wie sie im Gebäudeinformationssystem vorgegeben ist, angebracht wird. Beispielsweise kann auch eine Feuchte der Umgebung und/oder eines bearbeiteten bzw. zu bearbeitenden Gegenstands sowie auch eine Temperatur des Werkzeugs, einer Umgebung und/oder eines bearbeiteten bzw. zu bearbeitenden Gegenstands erfasst werden. Beispielsweise kann beim Aufbringen von Klebstoff erfasst werden, ob die mit dem Klebstoff zu beschichtende Fläche die korrekte Temperatur und Feuchtigkeit aufweist. Beim Einsatz eines Heißluftgebläses oder eines Lötwerkzeugs kann festgestellt werden, ob die korrekte Temperatur des bearbeiteten Gegenstands und des Werkzeugs bzw. des von dem Werkzeug erzeugten Heißluftstroms oder der von dem Werkzeug erzeugten Flamme vorhanden ist. Schließlich können Identifikationsdaten eines Bedieners, speziell Name oder eine Kennnummer des Bedieners, erfasst werden. Selbstverständlich kann neben einer Uhrzeit und einem Datum auch eine Dauer des Arbeitsschritts erfasst werden.

Zu dem Arbeitsschritt gehörende Parameter oder Daten können mittels eines in dem Werkzeug angeordneten Drehzahlsensors, eines in dem Werkzeug angeordneten Drehmomentsensors, eines in dem Werkzeug angeordneten Drehpositionssensors, eines an dem Werkzeug angeordneten Positionssensors, eines an dem Werkzeug angeordneten Abstandssensors, eines an dem Werkzeug angeordneten optischen Sensors, eines an dem Werkzeug angeordneten Ultraschallsensors, eines an dem Werkzeug angeordneten Hochfrequenzsensors, eines in oder an dem Werkzeug angeordneten Temperatursensors und/oder eines in oder an dem Werkzeug angeordneten Feuchtesensors erfolgen.

In Weiterbildung der Erfindung ist der Computer in dem Werkzeug angeordnet und es ist das Übertragen von Solldaten, die zu einem mit dem Werkzeug durchzuführenden Arbeitsschritt gehören, auf diesen Computer vorgesehen.

Beispielsweise werden von einem Gebäudeinformationssystem die Sollpositionen für anzubringende Bohrlöcher an den Computer in dem Werkzeug übermittelt. Aufgrund eines Positionssensors in dem Werkzeug kann das Werkzeug feststellen, ob es bzw. der Werkzeugeinsatz an der vorgegebenen Sollposition angeordnet ist oder nicht. Beispielsweise können von dem Gebäudeinformationssystem auch Informationen über die Position von Elektrokabeln übermittelt werden, so dass das handgeführte Werkzeug, beispielsweise eine elektrische Handbohrmaschine, dann automatisch eine Warnmeldung ausgibt, wenn versucht wird, ein Bohrloch im Bereich von Elektrokabeln zu setzen. Das handgeführte Werkzeug kann hierzu eine Anzeigevorrichtung aufweisen, um Warnmeldungen oder weitere Meldungen anzuzeigen. Solldaten, die auf den Computer in dem handgeführten Werkzeug übertragen werden, können beispielsweise auch Drehmomente für einzudrehende Schrauben oder dergleichen sein. Das handgeführte Werkzeug kann auch gemäß der Solldaten gesteuert werden.

In Weiterbildung der Erfindung ist das Vergleichen der Solldaten mit den zu dem Arbeitsschritt gehörenden erfassten Bilddaten, Sensordaten und/oder Gerätedaten vorgesehen.

Wird beispielsweise ein Solldrehmoment für das Eindrehen einer Schraube vorgegeben, wird das Istdrehmoment, mit dem die Schraube dann tatsächlich eingedreht wurde, abgespeichert und mit dem Solldrehmoment verglichen. Bei einer Abweichung der Istwerte von den Sollwerten kann eine Warnmeldung ausgegeben werden. Beispielsweise können auch Sollpositionen mit Istpositionen verglichen werden, beispielsweise Sollpositionen und Istpositionen von Bohrlöchern.

In Weiterbildung der Erfindung ist das Erzeugen einer Warnmeldung oder eines Warnsignals vorgesehen, wenn ein Vergleich der Solldaten mit den erfassten Bilddaten, Sensordaten und/oder Gerätedaten eine außerhalb eines vordefinierten Bereichs liegende Abweichung ergibt und ggf. Steuern des handgeführten Werkzeugs mit den Solldaten.

In Weiterbildung der Erfindung ist das Anzeigen der Solldaten mittels einer Anzeigevorrichtung an dem Werkzeug vorgesehen.

Beispielsweise wird eine elektrische Handbohrmaschine an eine Sollposition eines Bohrlochs bewegt. Sobald die Sollposition erreicht ist, wird ein entsprechendes Bestätigungssignal auf der Anzeigevorrichtung ausgegeben. Zusätzlich können dann auch die Sollbohrlochtiefe und die Sollbohrlochgröße angezeigt werden.

In Weiterbildung der Erfindung ist das automatische Begrenzen einer maximalen Drehzahl und/oder eines maximalen Drehmoments des Werkzeugs in Abhängigkeit der Solldaten vorgesehen.

Das der Erfindung zugrunde liegende Problem wird auch durch ein handgeführtes Werkzeug zum Durchführen eines erfindungsgemäßen Verfahrens gelöst, wobei das handgeführte Werkzeug wenigstens eine mit dem Werkzeug insbesondere mechanisch verbundene Kamera aufweist.

Das Vorsehen einer mechanisch mit dem handgeführten Werkzeug verbundenen Kamera erlaubt es in überraschend einfacher Weise, mit dem handgeführten Werkzeug durchgeführte Arbeitsschritte zu dokumentieren.

In Weiterbildung der Erfindung ist das handgeführte Werkzeug mit Sensoren zum Erfassen von zu einem Arbeitsschritt gehörenden Parametern versehen.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen dargestellten und beschriebenen Ausführungsformen können dabei in beliebiger Weise miteinander kombiniert werden, ohne den Rahmen der Erfindung zu überschreiten. Dies gilt auch für die Kombination von Einzelmerkmalen ohne weitere Einzelmerkmale, mit denen sie im Zusammenhang beschrieben sind. In den Zeichnungen zeigen:
- Fig. 1: eine schematische Darstellung eines erfindungsgemäßen handgeführten Werkzeugs gemäß einer ersten Ausführungsform,
- Fig. 2: eine schematische Darstellung eines erfindungsgemäßen handgeführten Werkzeugs gemäß einer zweiten Ausführungsform und
- Fig. 3: eine schematische Darstellung eines Koffers für ein erfindungsgemäßes handgeführtes Werkzeug gemäß der ersten oder zweiten Ausführungsform.

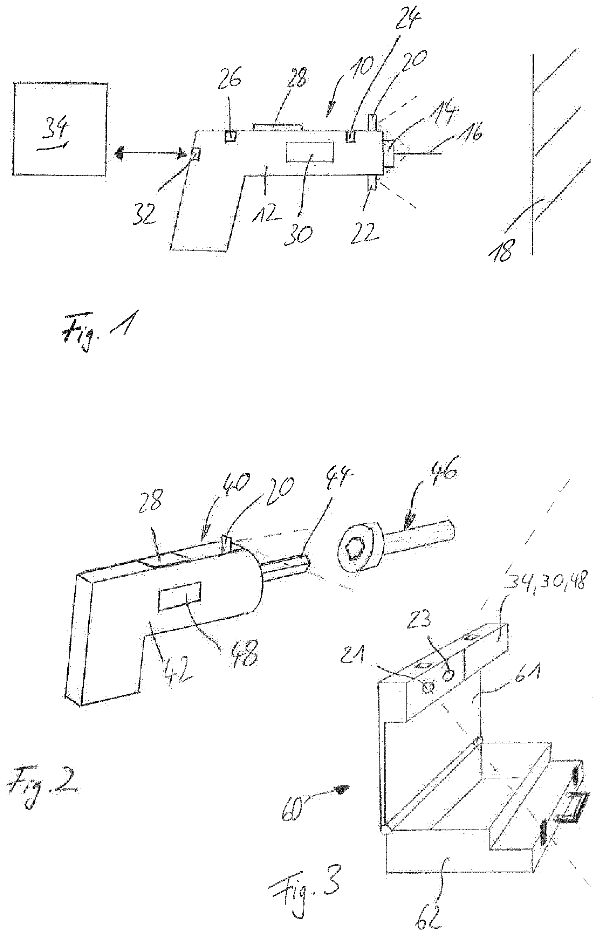

Fig. 1 zeigt ein handgeführtes Werkzeug 10 gemäß einer ersten Ausführungsform der Erfindung. Das handgeführte Werkzeug ist als elektrische Bohrmaschine ausgebildet. Das handgeführte Werkzeug ist mit einem Gehäuse 12, einem Bohrfutter 14 und einem Werkzeugeinsatz 16 versehen. Der Werkzeugeinsatz 16 ist bei der dargestellten Ausführungsform als Spiralbohrer ausgeführt. Mit dem Werkzeugeinsatz soll in einer Gebäudewand 18 ein Loch gebohrt werden.

Das Gehäuse 12 ist mit zwei ausklappbaren Kameras 20, 22 versehen. Die erste Kamera 20 ist auf einer Oberseite des Gehäuses 12 angeordnet und ihr Blickfeld ist so ausgerichtet, dass es sowohl den Werkzeugeinsatz 16 als auch einen Bereich vor dem Werkzeugeinsatz 16, in dem sich in Fig. 1 die Gebäudewand 18 befindet, umfasst. Die zweite Kamera 22 ist gegenüber der ersten Kamera 20 an einer Unterseite des Gehäuses angeordnet und ebenfalls mit ihrem Blickfeld so ausgerichtet, dass der Werkzeugeinsatz 16 und ein Bereich vor dem Werkzeugeinsatz 16, in dem sich in Fig. 1 die Gebäudewand 18 befindet, erfasst sind. Im Rahmen der Erfindung kann lediglich eine Kamera vorgesehen sein oder es können auch mehr als zwei Kameras vorgesehen sein. Mittels zwei Kameras 20, 22 lässt sich ein räumliches Bild des Werkzeugeinsatzes 16 sowie des Bereichs vor dem Werkzeugeinsatz 16 aufnehmen. Dies verbessert die Dokumentation eines Arbeitsschritts, die mittels der Kameras 20, 22 erstellt werden soll, erheblich. Im Gehäuse 12 ist ein weiterer Sensor 24 vorgesehen, der beispielsweise als Drehmomentsensor und/oder als Abstandssensor ausgebildet ist. Mittels des Drehmomentsensors 24 kann ein auf den Werkzeugeinsatz 16 aufgebrachtes Drehmoment und/oder ein Abstand des Gehäuses 12 von der Gebäudewand 18 erfasst werden.

Ebenfalls in dem Gehäuse 12 angeordnet ist ein Positionssensor 26, beispielsweise ein GPS-Sensor oder ein Sensor eines Navigationssystems, mit dem eine Bestimmung der Position des handgeführten Werkzeugs 10 in einem Gebäude festgestellt werden kann.

Auf einer Oberseite des Gehäuses 12 ist weiter eine Anzeigevorrichtung 28, ein sogenanntes Display, vorgesehen. In dem Gehäuse des handgeführten Werkzeugs 12 ist ein Computer 30 angeordnet, der mit den beiden Kameras 20, 22, dem Drehmomentsensor 24, dem Positionssensor 26 sowie auch der Anzeigevorrichtung 28 verbunden ist. Die Bilddaten der beiden Kameras 20, 22, die Sensordaten der Sensoren 24, 26 werden zu dem Computer 30 übertragen, der diese dann in geeigneter Form, gegebenenfalls unter Hinzufügung weiterer Daten, zu einer Dokumentation eines durchgeführten Arbeitsschritts verarbeiten kann. Über die Anzeigevorrichtung 28 können Informationen ausgegeben werden, es können aber auch weitere Daten über die Anzeigevorrichtung 28 eingegeben werden, beispielsweise der Name oder eine Kennung eines Bedieners und dergleichen. Über die Anzeigeeinheit 28 können beispielsweise auch Beginn und Ende eines Arbeitsschritts eingegeben werden, um die Kameras 20, 22 zu aktivieren und wieder auszuschalten.

Vor Beginn eines Arbeitsschritts können die beiden Kameras 20, 22 auch durch einfaches Ausklappen aktiviert werden. Die Kameras 20, 22 nehmen dann fortlaufend Bilddaten auf, beispielsweise während mittels des Spiralbohrers, also des Werkzeugeinsatzes 16, ein Loch in der Gebäudewand 18 gebohrt wird. Mittels der beiden Kameras 20, 22 oder eines Abstandssensors kann auch festgestellt werden, wie tief das Bohrloch ausgeführt wird, und es kann auch festgestellt werden, welchen Durchmesser der verwendete Spiralbohrer hat und welchen Durchmesser das entstandene Bohrloch hat. Ist das Bohrloch gebohrt, können die beiden Kameras 20, 22 entweder abgeschaltet werden oder die Kameras 20, 22 können noch im Betrieb bleiben, beispielsweise während des manuellen Einsetzens eines Dübels in das Bohrloch.

Nach Abschluss des Arbeitsschritts kann eine zugehörige Dokumentation, wie beschrieben wurde, in dem Computer 30 erstellt werden.

Die Dokumentation kann dann über eine Schnittstelle 32 an dem Gehäuse 42 ausgegeben werden. Die Schnittstelle 32 kann dabei als einfacher Stecker oder auch als drahtlose Schnittstelle ausgebildet sein. Die Dokumentation wird dann zu einem übergeordneten Speicher bzw. Rechner 34 übertragen, beispielsweise zu einem Gebäudeinformationssystem.

In umgekehrter Richtung können von dem Rechner bzw. Speicher 34 auch Daten zu dem handgeführten Werkzeug 10 mittels der Schnittstelle 32 übertragen werden. Dies können beispielsweise Solldaten für durchzuführende Arbeitsschritte sein. Solldaten können beispielsweise die Position eines anzubringenden Bohrlochs im Raum, die Bohrlochtiefe und der Durchmesser eines anzubringenden Bohrlochs sein, sowie gegebenenfalls dann auch ein Anzugsmoment für eine in das Bohrloch einzuschraubende Schraube. Solche Solldaten können auf der Anzeigevorrichtung 28 angezeigt werden. Im Computer 30 kann beispielsweise auch ein Vergleich zwischen den Solldaten und den beim Durchführen des Arbeitsschritts erfassten Istdaten vorgenommen werden und das Vergleichsergebnis kann Eingang in die Dokumentation finden und/oder auch auf der Anzeigevorrichtung 28 angezeigt werden.

Die Darstellung der Fig. 2 zeigt ein handgeführtes Werkzeug 40 gemäß einer weiteren Ausführungsform der Erfindung. Das handgeführte Werkzeug 40 ist als Akkuschrauber ausgebildet und weist lediglich eine Kamera 20 am Gehäuse 42 auf. Die Kamera 20 ist so angeordnet, dass ihr Blickfeld einen Bereich vor dem handgeführten Werkzeug und ein Schrauberbit 44, das in das Bohrfutter des Akkuschraubers eingesetzt ist, umfasst. Im Bereich vor dem Akkuschrauber und damit im Blickfeld der Kamera 20 ist beispielhaft eine Schraube 46 dargestellt. Die Schraube 46 weist eine Antriebsausbildung in Form eines Innensechskants auf und das Schrauberbit 44 weist einen Außensechskant auf. Mittels der Kamera 20 kann nun eine Drehposition des Innensechskants an der Schraube 46 erfasst werden und das Schrauberbit 44 kann, nach Auswertung der Bilddaten von der Kamera 20 in einem Computer 48 im Gehäuse 42, so verdreht werden, dass das Schrauberbit 44 in den Innensechskant der Schraube 46 eingesetzt werden kann. Um das Schrauberbit 44 in die Antriebsausbildung der Schraube 46 einzusetzen, ist dadurch nicht wie bisher ein Hin- und Herdrehen des Gehäuses 42 oder des Schrauberbits 44 erforderlich. Das Schrauberbit 44 ist bereits korrekt ausgerichtet und ein Bediener kann unmittelbar mit dem Einschraub- oder Ausschraubvorgang beginnen. Eine Drehposition des Schrauberbits 44 kann ständig überwacht und korrigiert werden, beispielsweise während des gesamten Vorgangs des Annäherns des Schrauberbits 44 an den Kopf der Schraube 46 mit der Antriebsausbildung.

Das Gehäuse 42 ist, wie das Gehäuse 12 des handgeführten Werkzeugs 10 in Fig. 1, mit einer Anzeigevorrichtung 28 versehen. Auf der Anzeigevorrichtung 28 können beispielsweise Solldrehzahlen oder Solldrehmomente für das Eindrehen der Schraube 46 angezeigt werden und es kann beispielsweise auch ein Istdrehmoment oder eine Istdrehzahl angezeigt werden. Drehzahl und Drehmoment werden beim Einschrauben gemäß den Solldaten aus dem Computer 30, 48 oder Speicher bzw. Rechner 34 gesteuert, so dass die Schraube gemäß der Solldaten eingeschraubt wird.

Die Kamera 20, 22 kann mechanisch mit dem handgeführten Werkzeug 10, 40 verbunden sein, wobei dann die mit diesem handgeführten Werkzeug 10, 40 durchgeführten Arbeitsschritte mit der Kamera 20, 22 erfasst werden.

Fig. 3 zeigt einen Koffer 60 mit einem klappbaren oder abnehmbaren Deckel 61 und einem Kofferhauptkörper 62 für ein handgeführtes Werkzeug 10, 40, wie es in Fig. 1 oder Fig. 2 gezeigt ist, oder ein weiteres nicht dargestelltes handgeführtes Werkzeug ohne Kamera. An dem Koffer 60 kann zumindest eine weitere Kamera 21, 23 vorgesehen sein und zwar gesondert und losgelöst von dem handgeführten Werkzeug 10, 40. Die Kamera 21, 23 kann im Rahmen der Erfindung auch an anderer Stelle des Koffers 60 angeordnet sein oder unabhängig vom Koffer als transportable Kamera ausgebildet sein. Die Kamera 21, 23 ist an dem Deckel 61 des Koffers 60 angeordnet und so positioniert, dass sie die mit dem handgeführten Werkzeug 10, 40 oder dem nicht dargestellten handgeführten Werkzeug ohne Kamera durchgeführten Arbeitsschritte erfasst. Dazu ist der Koffer 60 an einer Stelle, an der die Arbeitsschritte mit dem handgeführten Werkzeug 10, 40 oder dem nicht dargestellten handgeführten Werkzeug ohne Kamera ausgeführt werden, zu positionieren. Der Computer 30, 48 und/oder Speicher bzw. Rechner 34 ist neben der Kamera 21, 23 in dem Deckel 61 angeordnet, kann aber auch an einem anderen Ort in dem oder an dem Koffer 60 angeordnet sein. Im Rahmen der Erfindung kann der Computer 30, 48 und/oder der Speicher beziehungsweise Rechner 34 und die Kamera 21, 23 oder können mehrere Kameras 21, 23 auch unabhängig von einem Werkzeugkoffer angeordnet sein und geeignet positioniert werden.

Zwischen dem handgeführten Werkzeug 10, 40 oder dem nicht dargestellten handgeführten Werkzeug ohne Kamera und dem Computer 30, 48 und/oder Speicher bzw. Rechner 34 besteht eine Kommunikationsverbindung, die insbesondere drahtlos ausgeführt ist. Die Kamera 21, 23 wird bei Betätigung des handgeführten Werkzeugs 10, 40 oder des handgeführten Werkzeugs ohne Kamera aktiviert, um die durchzuführenden Arbeitsschritte zu erfassen. Außerdem ist das handgeführte Werkzeug 10, 40 oder das nicht dargestellte handgeführte Werkzeug ohne Kamera dahingehend mit dem Computer 30, 48 oder dem Speicher bzw. Rechner 34 gekoppelt, dass es auf der Anzeigevorrichtung 28 beispielsweise Solldrehzahlen oder Solldrehmomente für das Eindrehen der Schraube 46 anzeigt. Drehzahl und Drehmoment werden beim Einschrauben gemäß der Solldaten aus dem Computer 30, 48 oder Speicher bzw. Rechner 34 gesteuert, so dass die Schraube gemäß den Solldaten eingeschraubt wird.

Situationsabhängig kann dann die Kamera 20, 22 und/oder die Kamera 21, 23 die Arbeitsschritte erfassen.

## Patentansprüche

1. Verfahren zum Dokumentieren wenigstens eines Arbeitsschrittes mit einem handgeführten Werkzeug (10; 40), wobei das handgeführte Werkzeug (10; 40) wenigstens eine mit dem Werkzeug (10; 40) insbesondere mechanisch verbundene Kamera (20, 22) aufweist, **gekennzeichnet durch** die Schritte: Aktivieren der Kamera (20, 22) und Aufnehmen von Bildern des Arbeitsschritts, der mit dem handgeführten Werkzeug (10; 40) ausgeführt wird, und Erzeugen von zu dem Arbeitsschritt gehörenden Bilddaten.

2. Verfahren nach Anspruch 1, **gekennzeichnet durch** Erfassen von weiteren zu dem Arbeitsschritt gehörenden Parametern mittels wenigstens eines weiteren, in oder an dem handgeführten Werkzeug (10; 40) angeordneten Sensors (24, 26) und Erzeugen von zu dem Arbeitsschritt gehörenden Sensordaten.

3. Verfahren nach Anspruch 1 oder 2, **gekennzeichnet durch** Erzeugen von zu dem handgeführten Werkzeug (10; 40) gehörenden Gerätedaten.

4. Verfahren nach Anspruch 1, 2 oder 3, **gekennzeichnet durch** Übertragen der erzeugten Bilddaten, Sensordaten und/oder Gerätedaten auf einen Computer (30; 48) und zumindest zeitweises Abspeichern der Bilddaten, Sensordaten und/oder Gerätedaten in dem Computer (30; 48).

5. Verfahren nach Anspruch 4, **gekennzeichnet durch** Erstellen einer Dokumentation des wenigstens einen Arbeitsschritts anhand der auf dem Computer (30; 48) gespeicherten Bilddaten, Sensordaten und/oder Gerätedaten.

6. Verfahren nach wenigstens einem der vorstehenden Ansprüche, **gekennzeichnet durch** Aktivieren der Kamera (20, 22) mittels Bewegen des handgeführten Werkzeugs, Einschalten des handgeführten Werkzeugs (10; 40) und/oder Ausklappen der Kamera (20, 22) aus einem Gehäuse des Werkzeugs (10; 40).

7. Verfahren nach wenigstens einem der vorstehenden Ansprüche, **dadurch gekennzeichnet, dass** das Erfassen von weiteren zu dem Arbeitsschritt gehörenden Parametern vorgesehen ist, wobei das Erfassen eines Datums, einer Uhrzeit, eines Materials eines mit dem Werkzeug (10; 40) bearbeiteten Gegenstands, einer Art und Größe eines verwendeten Werkzeugeinsatzes, einer Drehposition eines Werkzeugeinsatzes relativ zu dem Werkzeug (10; 40), einer Bohrlochtiefe oder Einschraubtiefe, einer Drehzahl eines Werkzeugeinsatzes des Werkzeugs (10; 40), eines Drehmoments eines Werkzeugeinsatzes des Werkzeugs (10; 40), einer Position des Werkzeugs (10; 40) und des Werkzeugeinsatzes im Raum, einer Temperatur des Werkzeugs (10; 40) einer Temperatur einer Umgebung und/oder einer Temperatur eines bearbeiteten Gegenstands, einer Feuchte der Umgebung und/oder eine Feuchte eines bearbeiteten Gegenstands und/oder von Identifikationsdaten eines Bedieners des Werkzeugs (10; 40) vorgesehen ist.

8. Verfahren nach Anspruch 7, **gekennzeichnet durch** Erfassen von Daten mittels eines in dem Werkzeug (10; 40) angeordneten Drehzahlsensors, eines in dem Werkzeug (10; 40) angeordneten Drehmomentsensors, eines in dem Werkzeug (10; 40) angeordneten Drehpositionssensors, eines an dem Werkzeug angeordneten Positionssensors, eines an dem Werkzeug (10; 40) angeordneten Abstandssensors, eines an dem Werkzeug (10; 40) angeordneten optischen Sensors, eines an dem Werkzeug (10; 40) angeordneten Ultraschallsensors, eines an dem Werkzeug (10; 40) angeordneten Hochfrequenzsensors, eines in oder an dem Werkzeug (10; 40) angeordneten Temperatursensors und/oder eines in oder an dem Werkzeug (10; 40) angeordneten Feuchtesensors.

9. Verfahren nach wenigstens einem der vorstehenden Ansprüche, wobei der Computer (30; 48) in dem Werkzeug angeordnet ist, **gekennzeichnet durch** Übertragen von Solldaten, die zu einem mit dem Werkzeug durchzuführenden Arbeitsschritt gehören, auf den Computer (30; 48).

10. Verfahren nach Anspruch 9, **gekennzeichnet durch** Vergleichen der Solldaten mit den zu dem Arbeitsschritt gehörenden erfassten Bilddaten, Sensordaten und/oder Gerätedaten.

11. Verfahren nach Anspruch 10, **gekennzeichnet durch** Erzeugen einer Warnmeldung oder eines Warnsignals, wenn ein Vergleich der Solldaten mit den erfassten Bilddaten, Sensordaten und/oder Gerätedaten eine außerhalb eines vordefinierten Bereichs liegende Abweichung ergibt und gegebenenfalls Steuern des handgeführten Werkzeugs (10; 40) mit den Solldaten.

12. Verfahren nach Anspruch 9, 10 oder 11, **gekennzeichnet durch** Anzeigen der Solldaten mittels einer Anzeigevorrichtung (28) an dem Werkzeug (10; 40).

13. Verfahren nach einem der Ansprüche 9 bis 12, **gekennzeichnet durch** automatisches Begrenzen einer maximalen Drehzahl und/oder eines maximalen Drehmoments des Werkzeugs (10; 40) in Abhängigkeit der Solldaten.

14. Handgeführtes Werkzeug zum Durchführen eines Verfahrens nach wenigstens einem der vorstehenden Ansprüche, **dadurch gekennzeichnet, dass** das handgeführte Werkzeug (10; 40) wenigstens eine mit dem Werkzeug (10; 40) insbesondere mechanisch verbundene Kamera (20, 22) aufweist.

15. Handgeführtes Werkzeug nach Anspruch 14, **dadurch gekennzeichnet, dass** das handgeführte Werkzeug (10; 40) mit Sensoren (24, 26) zum Erfassen von zu einem Arbeitsschritt gehörenden Parametern versehen ist.
